# EUROPEAN PATENT SPECIFICATION

(11) **EP 1 387 994 B1**
(45) Date of publication and mention of the grant of the patent: **21.12.2005**
(21) Application number: 02714353.6
(22) Date of filing: 05.04.2002
(51) Int. Cl.: F27D 17/00

(54) **METHOD FOR THE CO-GENERATION OF HEAT AND POWER IN CONJUNCTION WITH HIGH TEMPERATURE HEAT NEEDS**
VERFAHREN ZUR GLEICHZEITIGEN ERZEUGUNG VON WÄRME UND ENERGIE IN VERBINDUNG MIT HOCHTEMPERATURWÄRMEBEDÜRFNISSEN
PROCEDE DE COPRODUCTION D'ENERGIES THERMIQUE ET ELECTRIQUE ASSOCIE A DES BESOINS THERMIQUES DE TEMPERATURE ELEVEES

(30) Priority: 09.04.2001 GR 2001100180
(43) Date of publication of application: 11.02.2004
(73) Proprietor: ESTIA CONSULTING S.A., 57001 Thermi/Thessaloniki (GR)
(72) Inventor: ESTIA CONSULTING S.A., 57001 Thermi/Thessaloniki (GR)
(86) International application number: PCT/GR2002/000023
(87) International publication number: WO 2002/081388

(56) References cited:
- WO-A-00/40839
- US-A- 2 401 285
- US-A- 3 958 922
- US-A- 4 528 012
- US-A- 5 247 907
- DATABASE WPI Section Ch, Week 199914 Derwent Publications Ltd., London, GB; Class E36, AN 1999-156890 XP002902624 & JP 11 014035 A (HITACHI LTD), 22 January 1999 (1999-01-22)

## Description

The present invention concerns a method which permits the application of Cogeneration of Heat and Power with high total cycle efficiencies, in relation with heat needs of relatively high temperature levels as those used in kilns and furnaces in the e.g. ceramics and heavy clay industry, in re-heating kilns and furnaces in the steel/metal industry, in glass furnaces, in cement industry etc.

It is widely known that Cogeneration of Heat and Power uses more efficiently the available in the fuel energy than the separate generation of Power and Heat. In several cases one of the common obstacles of CHP applicability is the efficient use of the heat which is cogenerated with the power. In many practical cases this is the limiting factor for the applicability of cogeneration methods. Especially in cases where the heat which is needed by the process is of higher temperature level than that produced by the CHP method and, because of process needs, this heat should be generated locally at several distributed points, application of CHP is difficult. Examples include as mentioned above ceramics or heavy clay firing kilns, glass furnaces etc.

One approach to CHP at high temperatures is the use of gas turbine exhaust gases as oxidiser to burn additional fuel in the burners of the kiln and/or the furnace. Although this can be achieved theoretically, there are several problems encountered when high total CHP cycle efficiency and reliability is concerned.

One problem is that modem gas turbine sets include relatively low oxygen content in their TEG- Turbine Exhaust Gases-. This ranges between 13 and 16% for most modem gas turbines. Moreover for reasons of high electric efficiency, recuperative gas turbines are more often available resulting in lower turbine exhaust temperatures.

Another problem is that in most of the above industries a large number of relatively small burners is used to be able to accurately control process temperatures locally. This creates problems of reliable operation mainly of the small burners with the lean oxygen content TEG -ignition problems, stability of operation etc.-.

A third problem is that to reach the high temperatures usually needed in these industrial sectors a significant amount of fuel is needed to be burned in the burners of the kilns.

This usually eliminates the advantages of applying CHP as there is small if not at all energy savings because the big amounts of heat generated by the kiln burners cannot be efficiently used in the process.

Finally in most of these industrial sectors preheated air is used as combustion air. Thus advantages in terms of energy savings when using TEG are eliminated unless an efficient method can be used instead.

### SUMMARY OF THE INVENTION.

According to the present invention a novel method as claimed in claim 1 is used to overcome the above mentioned problems. The method concerns the use of the hot process material exiting the firing zones of the kiln, or the use of the hot gases exiting the high temperature environment of the furnace, or both. These can be cooled to increase the temperature of the TEG at higher temperatures than the temperature at the exit of the gas turbine set eliminating at the same time the air used as combustion air.

By applying this method all problems mentioned before can be efficiently faced: By increasing the TEG temperature using the hot material or the hot gases exiting the kiln more reliable operation of the burners can be achieved even at the low oxygen content of the TEG produced by the modern gas turbines. Additionally TEG preheated by the hot material or the hot gases has direct positive effect on the total efficiency of the cycle eliminating the amount of fuel needed in the burners to reach the desired high temperature of the process. On top of that it eliminates the amount of air used for the cooling of the material and as such it eliminates the amount of the preheated air used for the combustion because now this cooling is being performed by the TEG. Moreover this method permits the efficient use of recuperative turbines in co-operation with kilns and furnaces where high temperature heat is needed.

### DESCRIPTION OF THE PRIOR ART.

The use of turbine based CHP sets is a usual CHP method and is based on the reliability of these units for continuous operation and relatively low service costs. It is known that the heat generated by the usual turbine sets is of relatively high temperature level -about 500°C- is mainly in the form of hot exhaust gases and contain a significant amount of oxygen, 14-15% weight in modem gas turbines. Thus turbine exhaust gases can be used under several circumstances as oxidiser to burn additional fuel. This method is known to significantly increase the total thermodynamic efficiency of the whole process depending on the final exhaust gas temperature. This is the reason for the common use of turbine exhaust gases as oxidiser in large centrally located regenerative boilers where additional fuel is burned in special large burners to produce, with proper heat exchange, diathermic medium -usually steam- for the process needs. Then this medium is circulated in the plant to cover the local decentralised heat needs of the process. This forms a common practice in industry where turbine based CHP is used to produce process steam and /or diathermic oil. However in several industrial sectors there is no need for a diathermic medium while at the same time process consumes large amounts of Heat at relatively high temperatures. These industrial sectors, where the main interest of this invention is focused, is the heavy clay, ceramics, glass, steel/metal, and cement industry, not excluding other industrial sectors, where there is little or no need for process steam or diathermic oil. In these industrial sectors there is at the moment no way to apply Cogeneration of Heat and Power with acceptable total cycle efficiency levels. An exception is the use of CHP sets in conjunction with the drying heat needs in the heavy-clay and the ceramics industry. Besides this kind of CHP applications, there is no case where the heat produced by the CHP set is used in the kilns and the furnaces of these industrial sectors. However by using the heat of the CHP in the kilns and the furnaces in these industrial processes can give rise to several benefits this being the subject of the present invention. Because of the high temperatures needed by the process in these industrial sectors, -more than 800°C and up to 1700°C- only gas turbine exhaust gases-TEG- which contain an amount of oxygen -usually 13 up to 15% weight for the modem gas turbines- can be used in the kilns as there must be enough oxygen in the oxidiser to burn additional fuel and reach the desired process temperatures.

The use of TEG as oxidiser in high temperature processes is known mainly from the following publications:
U.S. pat. No 4 332 546 A issued on 1^{st} of June 1982.
U.S. pat. No 4 528 012 issued on 9^{th} of July 1985.
WO 00/40839 A3 published on 04 of January 2001.
However the content of these publications is not related with the core problem faced by the present invention.

In U.S. pat. No 4 528 012 a method for applying cogeneration in conjunction with a glass furnace is described. This method does not use a typical gas turbine set but a purpose made turbine set where the heat needed to raise the temperature of the compressed air is given mainly by the process and is upgrated, when needed by a burner (heat exchanger 34 and burner 35 in fig.6 of the document). Moreover the gases exiting the turbine T is clean air (see description and claims 1&2 of the above patent), and not exhaust gases, thus not TEG. This approach have several disadvantages:

A specially constructed turbine is needed and not a gas-turbine set with the typical gas-turbine combustion chamber. The role of the gas turbine combustion chamber is been taken by the heat exchanger 34 and the burner 35 in fig. 6 of the U.S. pat. No 4 528 012. This increases considerably the cost for applying this scheme. Moreover three duct lines are needed to connect the purpose made turbine with the process.

A more significant disadvantage is that the turbine cannot work to produce power if the process is off as it needs the heat generated in the process and the burner to heat the air in the heat exchanger 34 expand it and operate the turbine T. This eliminates considerably the benefits of CHP as this application is not an independed by the process and by the process variations, source of power. This means that turbine cannot generating power if the process shut down or stops.

U.S. pat. No 4 332 546 deals mainly with the use of a gas seal in a process using GTE - Gas Turbine Exhaust- in a cracking furnace. The focus of the patent is not on the use of GTE but on the gas seal which is used for control purposes. However the GTE process described in the U.S. pat. No 4 332 546 is not related in any case with the inventive step of the present application which is the increase of the TEG temperature by the cooling of the hot material or the hot gases exiting the kiln.

The document WO 00/40839/A3 forms amended claims of the prior document WO 00/40839. Although initial document WO 00/40839 does not give solutions to the problems solved by the present invention, the amended claims contained in the document WO 00/40839/A3 present a process wherein the heated exhaust gases are fed in the burners of the kiln or the furnace.

### DESCRIPTION OF THE INVENTION

The present invention as claimed in claim 1 concerns the use of the exhaust gases generated by Electricity Generating Devices -EGD's- e.g. gas turbine sets or recuperative gas turbine sets or reciprocating engine sets etc. - as oxidiser, alone or in a mixture with air of various temperatures or even in a mixture with air and/or oxygen of various temperature levels for the combustion of additional fuel locally where distributed and individually controllable generation of heat is needed as in the kilns and the furnaces of the ceramics, heavy-clay, glass, steel/metal, cement and other high temperature industrial sectors.

Exhaust gases are produced by the EGD(s). Exhaust gases may contain oxygen at various percentages usually between 10 and 16% weight according to the type and the construction of the EGD. Exhaust gases are heated by the hot processed material or the , hot process exhaust gases which is cooled for process efficiency reasons giving their heat to the exhaust gases. Exhaust gases are so heated to, considerably, higher temperature than the temperature at their exit from the EGD. They are then guided to the points where decentralised generation of heat is needed. These points are usually distributed along the kilns according to the process temperature profile needed to be achieved in the kiln or in the furnace. There, specially constructed burners are used to burn additional fuel, each one using these heated exhaust gases, which are all fed in the furnace room, as oxidizer. The burners can be individually controlled to achieve process needs. If and when needed, turbine exhaust gases can be enriched by a mixture of air and/or pure oxygen of various temperature levels to achieve process conditions. Part or all of the gas-turbine exhaust gases increase their temperature before used as oxidiser at a temperature higher than the temperature exiting the gas turbine set, in a heat exchange process with the hot processed material exiting the firing zones of the kiln or in a heat exchanging process with the hot gases exiting the furnace or in a hybrid process where both hot material and gases are used to heat the EGD exhaust gases.

By using this method it is possible to apply CHP in processes where heat of high temperature level is needed to be generated decentralised and to be locally controllable. Environmental benefits are also significant as the use of the fuel is performed at high efficiencies.

## Claims

1. Method for the cogeneration of Heat and Power where, an independent from the heat consuming process Electricity Generating Device (EGD), e.g. a gas turbine or a recuperative gas turbine or a reciprocating engine, is connected with the process where the heat and the exhaust gases, not being clean air, generated by the device is used and where EGD exhaust gases are used as oxidiser to burn additional fuel, and the temperature of the EGD exhaust gases is increased by the cooling of the hot processed material or the hot exhaust gases generated in the heat consuming process, i.e. in the kiln or the furnace, before the EGD exhaust gases are used as oxidiser to burn additional fuel in the kiln(s) and the furnace(s) in e.g. the ceramics, heavy-clay, glass, metal or steel processing and cement industry where the material processed should be heated to temperatures which are considerably higher than the temperature of the exhaust gases exiting the EGD, **characterized in that** all the heated exhaust gases are fed into the furnace room of the kiln or the furnace.

2. A method as described in claim 1 wherein the temperature of the EGD exhaust gases is increased to a temperature higher than the one at the exit of the EGD, before they are used as oxidiser in the kiln or furnace, in a heat exchanging process via a heat exchanger by the hot material exiting the firing zones of the kiln or furnace.

3. A method as described in claim 1, wherein the temperature of the EGD exhaust gases is increased to a temperature higher than the one at the exit of the EGD, before they are used as oxidiser in the kiln or furnace, in a heat exchanging process by the hot exhaust gases exiting the firing zones of the kiln or furnace.

4. A method as described in claim 1, wherein the temperature of the EGD exhaust gases is increased to a temperature higher than the one at the exit of the EGD, before they are used as oxidiser in the kiln or furnace, in a heat exchanging process in touch with the hot material exiting the firing zones of the kiln or furnace.

5. A method as described in claim 1, wherein the oxygen content of the EGD exhaust gases, which are used as oxidizer, is enhanced with pure oxygen or even air at various flow-rates and temperatures in order to achieve better combustion conditions.

6. A method as described in claim 1 wherein the EGD exhaust gases are used in an hybrid scheme i.e. part as oxidiser in the kiln or furnace and part for conventional heating purposes.

## Patentansprüche

1. Es handelt sich um eine Kraft-Wärme-Kopplung Methode, in der ein unabhängige von einem wärmeverbrauchenden Verfahren Stromerzeugungsanlage (SEA), wie z. B. eine Gasturbine oder eine rekuperative Gasturbine oder ein Hubkolbenmotor, an dem Verfahren angeschlossen wird, und in der aus der Vorrichtung erzeugte Wärme und Rauchgas, welches keine saubere Luft ist, verwendet werden und in welcher die SEA Abgase als Oxydationsmittel für die Verbrennung vom zusätzlichen Kraftstoff benutzt werden, und in der die Temperatur der SEA Abgase wird erhöht durch das Abkühlen des heißen zum Verarbeiten Materials oder der heißen Abgase, welche im verbrauchenden thermischen Verfahren erzeugt werden, d. h. im Brennofen oder in der Feuerungsanlage, bevor die SEA Abgase als Oxydationsmittel verwendet werden, um zusätzlichen Kraftstoff im Brennofen oder in den Feuerungsanlagen zu verbrennen, in z. B. der Keramik-, Schwerziegel-, Glas-, Metall- oder Stahlverarbeitung sowie der Zementindustrie, in welcher das zu verarbeitende Material an Temperaturen geheizt werden sollte, die beträchtlich höher als die Abgastemperatur der SEA sind, die **gekennzeichnet** sind, in dem alle geheizten Abgase in den Ofenraum des Brennofens oder der Feuerungsanlage eingeleitet werden.

2. Eine Methode, wie in Anspruch 1 beschrieben, worin die Temperatur der SEA Abgase, bevor sie als Oxydationsmittel im Brennofen oder in der Feuerungsanlage verwendet werden, auf eine höhere Temperatur als die am Ausgang der SEA erbracht werden, durch ein wärmetauschendes Verfahren mittels eines Wärmetauschers mit dem heißen Material, welches aus den Zündungzonen des Brennofens oder der Feuerungsanlage heraus kommt.

3. Eine Methode, wie in Anspruch 1 beschrieben, worin die Temperatur der SEA Abgase, bevor sie als Oxydationsmittel im Brennofen oder in der Feuerungsanlage verwendet werden, auf eine höhere Temperatur als die am Ausgang der SEA erbracht werden, mittels eines wärmetauschenden Verfahren mit den heißen Abgasen, welche aus den Zündungzonen des Brennofens oder der Feuerungsanlage heraus kommen.

4. Eine Methode, wie in Anspruch 1 beschrieben, worin die Temperatur der SEA Abgase, bevor sie als Oxydationsmittel im Brennofen oder in der Feuerungsanlage verwendet werden, auf eine höhere Temperatur als die am Ausgang der SEA erbracht werden, mittels eines wärmetauschenden Verfahren durch Berührung mit dem heißen Material, welches aus den Zündungzonen des Brennofens oder der Feuerungsanlage heraus kommt.

5. Eine Methode, wie in Anspruch 1 beschrieben, worin der Sauerstoffinhalt der SEA Abgase, welche als Oxydationsmittel verwendet werden, mit reinem Sauerstoff oder sogar Luft an verschiedenen Strömungsgeschwindigkeiten und Temperaturen angereichert werden, zwecks bessere Verbrennung zu erzielen.

6. Eine Methode, wie in Anspruch 1 beschrieben, worin die SEA Abgase in einem hybriden Kreislauf verwendet werden, d. h. zum Teil als Oxydationsmittel im Brennofen oder in der Feuerungsanlage und zum Teil zu herkömmlichen Heizungszwecken.

## Revendications

1. Méthode de cogénération de la chaleur et d' Électricité, qui est indépendante du procédé de consommation de chaleur où un Appareil de Génération d'Électricité, (AGE), par exemple turbine à gaz ou turbine à gaz avec récupération de chaleur ou un moteur à gaz, est lié au procédé où la chaleur et le gaz de combustion, n'étant pas d'air propre, générés par l'AGE s'utilise et où le gaz de combustion de l'AGE s'utilise comme oxydant pour brûler supplémentaire de combustible. A cette methode la température du gaz de combustion de l'AGE s'élève par le refroidissement du matériel chaud traité, ou par le refroidissement de le gaz de combustion chaud généré par le procédé de consommation de chaleur, avant que le gaz de combustion de l'AGE s'utilise comme oxydant pour brûler de combustible complémentaire dans le four ou le fourneau existent par exemple dans l'industrie de céramiques, de céramique lourde, de verre, de métal ou d'acier et de ciment où le matériel traité faut être chauffé aux températures qui sont notablement plus hautes que celles du gaz de combustion de l'AGE, **caractérisé par** l' utilisation de tous le gas de combustion de l'AGE chauffé dans la chambre de combustion du four ou fourneau.

2. Une même méthode que ceci décrit dans la revendication 1, où la température de gaz de combustion de l'AGE s'élève à une température plus haute que ceci de la sortie de l'AGE, avant que leur utilisation comme oxydant dans le four ou le fourneau, dans un procédé d'échange de chaleur par le matériel chaud qui sorte les zones de feux d'un four ou fourneau.

3. Une même méthode que ceci décrit dans la revendication 1, où la température de gaz de combustion de l'AGE s'élève à une température plus haute que ceci de la sortie de l'AGE, avant que leur utilisation comme oxydant dans le four ou le fourneau, dans un procédé d'échange de chaleur par le gas de combustion chaud qui sort les zones de feux d'un four ou fourneau.

4. Une même méthode que ceci décrit dans la revendication 1, où la température de gaz de combustion de l'AGE s'élève à une température plus haute que ceci de la sortie de l'AGE, avant que leur utilisation comme oxydant dans le four ou le fourneau, pendant un procédé d'échange de chaleur avec contact à de matériel qui sorte les zones de feux d'un four ou fourneau.

5. Une même méthode que ceci décrit dans la revendication 1, où l'oxygène qui se contenir dans le gaz de combustion de l'AGE, enrichi avec de l'oxygène pur ou même avec d'air des plusieurs débits ou des températures de reussir des meilleurs conditions de combustion.

6. Une même méthode que ceci décrit dans la revendication 1, où le gaz de combustion de l'AGE, se sont utilisés par un schéma hybride, par exemple partiellement dans un four ou fourneau comme oxydant et partiellement aux procédés de chauffage conventionnels.
